# EUROPEAN PATENT SPECIFICATION

(11) **EP 0 535 296 B1**
(45) Date of publication and mention of the grant of the patent: **02.09.1998**
(21) Application number: 92105537.2
(22) Date of filing: 31.03.1992
(51) Int. Cl.: B28D 5/02, B23D 59/00

(54) **Slicing machine**
Schneidemaschine für Aufschnitt
Machine à découper en tranches

(30) Priority: 30.09.1991 JP 252576/91
(43) Date of publication of application: 07.04.1993
(73) Proprietor: Mitsubishi Materials Corporation, Chiyoda-ku Tokyo (JP)
(72) Inventor: Kimura, Yoshihiko, c/o Tsukuba-Seisakusho, Ishige-machi, Yuuki-gun, Ibaraku-ken (JP)
(74) Representative: Füchsle, Klaus, Dipl.-Ing.

(56) References cited:
- EP-A- 0 432 637
- US-A- 4 991 475
- US-A- 5 036 274
- PATENT ABSTRACTS OF JAPAN vol. 10, no. 205 (E-420)17 July 1986 & JP-A-61 047 644 ( HITACHI LTD ) 8 March 1986
- PATENT ABSTRACTS OF JAPAN vol. 15, no. 321 (M-1147)15 August 1991 & JP-A-3 121 769 ( NACHI FUJIKOSHI CORP. ) 23 May 1991

## Description

### BACKGROUND OF THE INVENTION

### 1. Field of the Invention

The present invention relates to a slicing machine, especially an internal diameter slicing machine which successively slices a material such as a single-crystal semiconductor ingot into wafers of a predetermined thickness by moving a cutting edge of the blade perpendicular to a central axis of the material.

### 2. Description of the Prior Art

Slicing machines used for cutting a block into slices, especially cutting a single-crystal semiconductor ingot in the form of a bar into wafers, generally comprise a feed-table to carry the bar to be sliced by the blade. The feed-table carrying the bar moves in the horizontal direction for cutting and then moves upward against the blade during cutting. This blade is usually an inner diameter disk cutter which cuts the bar by a tip formed along the inner-edge of the ring type disk.

For producing a wafer having a uniform thickness, it is important to arrange a side surface of the blade to meet at right angles with a central axis of the bar during the cutting process. Therefore, a deviation detecting and correcting means can be required for slicing the bar with high accuracy.

In Japanese Patent Application KOKAI number HEI3-121769, for example, there is disclosed a slicing machine having: a detecting means for detecting a deviation of the blade in the width direction of the blade i.e., in the horizontal direction of the material to be sliced; at least of one pair of magnetic force generating means distributed each side of the blade and generating magnetic forces extending toward the blade; and control means operably connected to the detecting means and magnetic force generating means for measuring the intensity of a magnetic force applied on the blade for controlling the intensity of the magnetic force such that the cutting edge of the blade is positioned in the correct cutting position. However, the detecting means of the above described conventional slicing machine is fixed at a point of the beginning of the cutting process and/or at a point of the ending of the cutting process, and consequently, it is difficult to direct the detecting means against at a contact point of the cutting edge in a cutting portion of the blade. Thus the cutting-accuracy of the conventional slicing machine is still not satisfactory because the deviation detecting and correcting means may put the cutting edge in the wrong manner by detecting vibrations or curvature of the blade's surface.

Other prior arts that are of interest are:-
EP-A-0 513 437 that discloses a machine for slicing silicon wafers from a silicon workpiece by means of a circular-shaped internal rotary cutting blade made of ferromagnetic material, there being a blade position detecting sensor positioned such that the sliced wafer does not intervene between the sensor and said blade; and (a) electromagnets positioned opposite to each other and with the cutting blade therebetween, or (b) one electromagnet only positioned adjacent to said cutting blade such that the sliced wafer does not intervene between said eletromagnet and said cutting blade; said sensor being used to control the force of said electromagnets or electromagnet to maintain a correct blade position during the cutting operation.
EP-A-0 353 745 that discloses a machine for slicing non-magnetic materials by means of a ferromagnetic circular-shaped internal rotary cutting blade, there being adacent the end face of the slice being cut a blade position detecting sensor and an electromagnet controlled by said sensor. In the particular embodiment the electromagnet is co-axial with said sensor and the two are housed in a common aluminium capsule. The sensor controls the force generated by the electromagnet such that a correct blade position is maintained during the cutting operation.
Patent Abstracts of Japan, JP-A-61 047 644, that is concerned with the control of an internal circumference blade for slicing a silicon crystal. Any warpage of the blade is detected by a sensor provided adjacent to that side of the blade that faces the bulk of the silicon crystal that is being cut. The sensor serves to actuate forced control of displacement or warpage of the blade by means of magnetic fields acting on both surfaces of the blade at one or more points with respect to the circumference of the blade.
EP-A-0 432 637 that is concerned with apparatus for the re-sharpening of parting tools by means of sharpening stones. The particular embodiemnt is disclosed with respect to the sharpening of an annular saw blade by moving the sharpening stones axially of the annular saw blade as well as in a direction parallel to the saw blade.

### BRIEF SUMMARY OF THE INVENTION

It is an object of the present invention to provide a slicing machine for cutting a cylindrical shaped workpiece having a cylindrical axis into slices of a uniform thickness, said slicing machine being as defined in the accompanying claims, Claim 1 of which has been divided into a two part form based on the assumption that the aforesaid EP-A-0 513 437 is the nearest state of the art.

It is preferable that the force generating means as defined in Claim 1 has a plurality of magnetic force generating sections arranged on a plane parallel to the cutting path. In addition, it is also preferable that the blade may be bowed away from the force generating means when the magnetic force is removed.

### BRIEF DESCRIPTION OF THE DRAWINGS

In the drawings:
FIG. 1 is a schematic view of a slicing machine according to an embodiment of the invention.
FIG. 2 is a view of the blade as seen in the direction indicated by the arrow A in FIG. 1.
FIG. 3 is a block diagram illustrating the slicing machine of FIG. 1.
FIG. 4 is a schematic view of a part of a slicing machine according to another embodiment of the invention.
FIG. 5 is a view of the blade to explain a dressing direction of the blade by a series of dressing means to cause the bowing of the blade.

### DETAILED DESCRIPTION OF THE PREFERRED EMBODIMENT

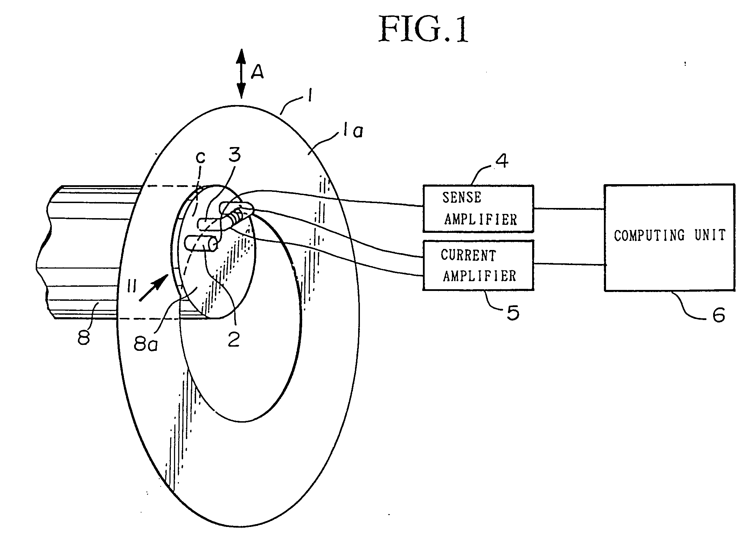

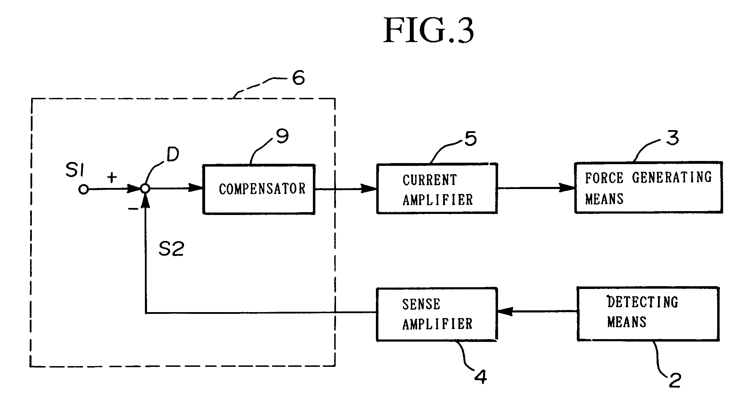

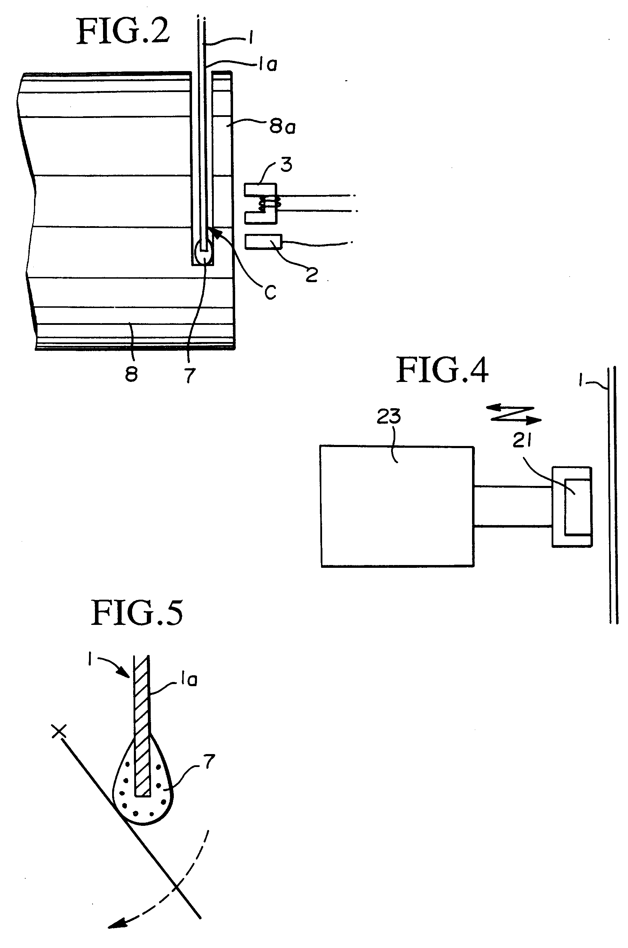

Referring to FIGS. 1 and 2, there is illustrated a slicing machine in accordance with the present invention which comprises a circular-shaped internal rotary blade 1, a detecting means 2, a force generating means 3, and a control means 4, 5 and 6.

The circular-shaped internal rotary blade 1 includes an annular thin body having a central opening and abrasive layer 7 deposited on an inner periphery of the body for serving as an inner peripheral cutting edge. This blade 1 is made of a strong magnetic material selected from a group of austenite type stainless steel (AISI301, 304), precipitation hardening type stainless steel (17-7PH) and the like, in which a martensite phase can be generated by cold-working, but not limited to these materials. The abrasive layer 7 mainly consists of a diamond sintering material or the like.

The circular-shaped internal rotary blade 1 described above is fixedly secured to a conventional spindle or rotary chuck so that it can be rotated at a high speed about the axis thereof. For example, the blade 1 is rotated by the conventional driving means (not shown) including an annular spindle and a motor, so that the outer periphery of the blade is coaxially fixed on the spindle rotated by the motor.

The blade 1 may be bowed away from the force generating means 3 when the force is removed. In this case, the bowing of the blade 1 may be caused by a tension generating means (not shown) or a dressing means (not shown). The generating means draws an outer periphery portion of the blade 1 in the radius direction thereof.

The dressing means may be arranged in a plane at the periphery of the blade 1. Referring to FIG. 5, the bowing of the blade 1 may be caused by the angle of inclination "X", with respect to the blade axis, of a series of dressing means for sharpening the blade 1. Consequently, the blade is bowed away from the force generating means 3 as indicated by a dashed line in the figure.

The detecting means 2 is movably located in a position opposed to the rear face 1a of the blade 1 for detecting a deviation of the cutting edge 7 from a correct cutting path. This detecting means 2 is comprised of a conventional blade-position detecting sensor i.e., an eddy-current instrument which has been used for measuring distance from a detecting head of the sensor to a magnetic material by detecting eddy-current loss caused by immersing the material in the magnetic field of the detecting head.

The force generating means 3, which is, for example, comprised of at least one electro-magnet, is located in a position opposed to the rear face 1a of the blade 1.

As shown in FIG. 2, the cutting edge is located at a cutting position "C" and the detecting means 2 and the force generating means 3 are located in opposed relation to the blade 1 in parallel. These means 2 and 3 are arranged so as to be adjacent each other in a direction parallel to the inner peripheral cutting edge 7 of the blade 1 and also they are separated from each other to keep a space therebetween enough to avoid reciprocal affections. Further, a distance from the blade 1 to the detecting means 2 and the force generating means 3 is larger than a thickness of a wafer to be sliced. These means have magnetic effects on the blade 1 through a partially-cut slice 8a of a material 8.

It is preferable that the detecting means 2 and force generating means 3 are provided in the plural form for improving the accuracy of the cutting.

The control means comprises a sense amplifier 4 connected to the detecting means 2, a current amplifier 5 connected to the force generating means 3, and a computing unit 6 connected to both amplifiers 4 and 5. The computing unit 6 is provided for receiving a first signal from the sense amplifier 4 and judging whether the position of the cutting edge 7 is on a prescribed correcting path or not, and also sending a second signal to the force generating means 3 to correct the position of the blade 1.

The material 8 to be sliced, such as a semiconductor crystal ingot but not limited thereto, is made of a non-magnetic material or a insulating material. This material 8 is introduced into the opening of the blade 1 in a direction perpendicular to the blade 1, and then moved transversely upwardly by a feed machine (not shown), so that the material 8 can be brought into cutting engagement with the inner peripheral cutting edge 7 and can be cut transversely into thin slices. Consequently, the cutting edge 7 of the blade 1 travels reciprocatory in a direction "A" perpendicular to the axis of the blade 1.

When the cutting process is started, the grindstone layer 7 deposited on the inner periphery of the blade 1 touches on a peripheral surface of the material 8 and then moves down to cut the material into a slice having a predetermined thickness.

Referring to FIG. 2, the detecting means 2 and the force generating means 3 produces effects on the blade 1 en route through the partially-cut slice 8a.

When the blade 1 deviates from the correct path, the detecting means 2 outputs a first signal to the computing unit 6 through the sense amplifier 4. In this unit 6, as shown in FIG. 3, the judgment described above is performed by means of a deviation detecting point D and a compensator 9 having a phase-lag filtering mechanism. The introduced signal S2 from the detecting means 2 is compared with a prescribed value S1 at the point D and a result of the comparison is converted as a second signal to be introduced into the compensator 9. An output signal from the compensator 9 is introduced in the force generating means 3 via the current amplifier 5. In the case that the blade 1 moves toward the detecting means 2, the detecting means 2 detects this deviation and outputs a signal to the computing unit 6 to decrease the strength of the magnetic force applied on the blade 1 so that the blade 1 is bowed away from the force generating means 3 by an extent so as to be retained at the correct cutting position. While in the case of that the blade 1 moves away from the detecting means 2, the detecting means 2 detects this deviation and outputs a signal to the computing unit 6 to increase the strength of the magnetic force applied on the blade 1 so that the blade 1 is pulled by the magnetic force so as to be retained at the correct cutting position.

During the cutting process, the detecting means 2 detects not only the mechanical deviation of the blade 1 but also detects the reciprocal movement thereof. That is, the distance between the cutting edge 7 and the detecting means 2 is periodically changed during the cutting process. Therefore the strength of the magnetic force generated by the force generating means 3 requires some modification dependent upon the vertical movement of the blade. In this case, the modification can be preformed by the conventional method using the computing unit 6 for avoiding a confusion of the reciprocal movement of the blade 1 and the mechanical deviation thereof.

The slicing machine according to the present invention has been specifically shown and described herein. However, the invention itself is not to be restricted by the exact showing of drawings or the description thereof. For example, a permanent magnet 21 can be used instead of the electronic magnet. In this case, the permanent magnet 21 may be arranged on a support 23 so as to move in the direction parallel to the axis of the blade 1 (see FIG. 4).

## Claims

1. A slicing machine for cutting a cylindrical shaped workpiece (8) having a central axis into slices (8a) of a selected uniform thickness, comprising:
a) a circular-shaped internal rotary blade (1) made of a ferromagnetic material, having an opening in the center thereof, and having a cutting edge (7) at an inner peripheral margin (1a) thereof;
b) blade rotating means for rotating said blade around a central axis thereof; and means for maintaining tension in said blade;
c) work supporting means for supporting said workpiece (8) and for positioning said workpiece inside said opening of said blade (1); and
d) moving means for moving at least one of said work supporting means and said blade rotating means such that a cutting edge of said blade experiences relative movement perpendicular to the central axis of said workpiece to slice said workpiece by said blade;
e) blade-position detecting means (2); and
f) magnetic force generating means (3);
**characterized in that**
said blade-position detecting means (2) is capable of generating a signal in response to an amount of displacement, from an initial position (C), of a cutting area of said blade to be inserted in said workpiece, wherein said detecting means is arranged opposite said cutting area of said blade so that a partially cut slice (8a) is disposed between said detecting means and said cutting area of said blade during a cutting operation;
said magnetic force generating means (3) is capable of generating a magnetic force to effectuate displacement of said cutting area of said blade (1), said magnetic force generating means being controllable to vary the magnitude of said magnetic force applied to said blade and thus the amount of deformation of said cutting area from said initial position; said magnetic force generating means generating an initial magnetic force so as to effectuate an initial deformation of said cutting area of said blade and to position said cutting area in said initial position prior to a cutting operation, wherein said magnetic generating means (3) is arranged opposite said cutting area of said blade so that said partially cut slice (8a) is disposed between said magnetic force generating means and said cutting area of said blade during said cutting operation; and
g) controlling means (2 to 6) for controlling said magnetic force generated by said magnetic force generating means (3) in order to control the amount of displacement of said cutting area from said initial position, said controlling means being responsive to said signal generated by said blade-position detecting means (2) to increase said magnetic force generated by said magnetic force generating means to increase the deformation of the cutting area of said blade relative to said initial deformation and thereby magnetically bias said cutting area in a first direction with respect to said initial position of said cutting area when said cutting area is displaced in a second direction opposite to said first direction as a result of the cutting operation, said controlling means (2 to 6) decreasing said magnetic force generated by said magnetic force generating means to reduce the deformation of said cutting area of said blade relative to said initial deformation and thereby permit said cutting area of said blade to move in said second direction opposite to said first direction when said cutting area is displaced in said first direction as a result of the cutting operation.

2. A slicing machine according to Claim 1, wherein said magnetic force generating means comprises at least one electromagnet (3) which is arranged opposite said cutting area of said blade (1) with said partially cut slice (8a) disposed between said at least one electromagnet and said cutting area of said blade during said cutting operation.

3. A slicing machine according to Claim 2, wherein said controlling means (2 to 6) shifts said cutting area of said blade from a free position thereof, towards said magnetic force generating means (3) to a predetermined initial position, by supplying an initial current to said at least one electromagnet (3) before beginning said cutting operation, and adjusts said initial current in accordance with said signals generated by said blade-position detecting means (2) during said cutting operation.

4. A slicing machine according to Claim 1, wherein said magnetic force generating means (3) comprises a plurality of force generating sections arranged on a plane parallel to said blade (1).

5. A slicing machine according to Claim 1, wherein said magnetic force generating means comprises at least one permanent magnet (2) and support means (23) which reciprocally moves said at least one permanent magnet in the direction parallel to the center axis of said blade (1) in response to the signal from said blade-position detecting means (2).

6. A slicing machine according to any one of Claims 1 to 5 wherein said blade is bowed away from the force generating means when the magnetic force is removed.

7. A slicing machine according to Claim 6, wherein the bowing of said blade is caused by a tension generating means.

8. A slicing machine according to Claim 7, wherein said tension generating means draws an outer periphery portion of said blade in the radius direction thereof.

9. A slicing machine according to Claim 6, wherein the bowing of said blade is caused by an angle of inclination, with respect to the blade axis, of a series of dressing means for sharpening said blade, said dressing means being arranged in a plane at the periphery of said blade.

## Patentansprüche

1. Schneidemaschine zum Schneiden eines zylindrisch geformten Werkstücks (8), das eine Mittelachse aufweist, in Scheiben (8a) einer ausgewählten einheitlichen Dicke, umfassend:
a) eine kreisförmige innere Drehklinge (1), die aus einem ferromagnetischen Material hergestellt ist, und die eine Öffnung in ihrer Mitte aufweist, und die eine Schneidkante (7) an ihrem inneren Umfangsrand (1a) aufweist;
b) eine Klingendreheinrichtung zum Drehen der Klinge um ihre Mittelachse; und eine Einrichtung zum Aufrechterhalten der Spannung in der Klinge;
c) eine Werkstückhalteeinrichtung zum Halten des Werkstücks (8) und zum Positionieren des Werkstücks im Inneren der Öffnung der Klinge (1); und
d) eine Bewegungseinrichtung zum Bewegen zumindest einer der Werkstückhalteeinrichtung und der Klingendreheinrichtung derart, daß eine Schneidkante der Klinge eine Relativbewegung rechtwinklig zu der Mittelachse des Werkstücks erfährt, um das Werkstück mit der Klinge zu schneiden;
e) eine Klingenstellungserfassungseinrichtung (2); und
f) eine Magnetkrafterzeugungseinrichtung (3);
**dadurch gekennzeichnet, daß**
die Klingenstellungserfassungseinrichtung (2) ein Signal in Antwort auf einen Betrag einer Verschiebung erzeugen kann, von einer Anfangsstellung (C) eines Schneidebereichs der in das Werkstück einzufügenden Klinge, wobei die Erfassungseinrichtung gegenüber dem Schneidebereich der Klinge so angeordnet ist, daß eine teilweise geschnittene Scheibe (8a) zwischen der Erfassungseinrichtung und dem Schneidebereich der Klinge während eines Schneidevorgangs angeordnet ist;
die Magnetkrafterzeugungseinrichtung (3) eine Magnetkraft erzeugen kann, um eine Verschiebung des Schneidebereichs der Klinge (1) zu bewirken, wobei die Magnetkrafterzeugungseinrichtung steuerbar ist, die Größe der auf die Klinge angewendeten Magnetkraft und somit den Betrag der Verformung des Schneidebereichs aus der Anfangsstellung zu verändern; wobei die Magnetkrafterzeugungseinrichtung eine anfängliche Magnetkraft erzeugt, um eine anfängliche Verformung des Schneidebereichs der Klinge zu bewirken und um den Schneidebereich in der Anfangsstellung vor einem Schneidevorgang zu positionieren, wobei die Magnetkrafterzeugungseinrichtung (3) gegenüber dem Schneidebereich der Klinge so angeordnet ist, daß die teilweise geschnittene Scheibe (8a) zwischen der Magnetkrafterzeugungseinrichtung und dem Schneidebereich der Klinge während des Schneidevorgangs angeordnet ist; und
g) Steuereinrichtungen (2 bis 6) zum Steuern der Magnetkraft, die durch die Magnetkrafterzeugungseinrichtung (3) erzeugt wird, um den Betrag der Verschiebung des Schneidebereichs aus der Anfangsstellung zu steuern, wobei die Steuereinrichtungen auf das durch die Klingenstellungserfassungseinrichtung (2) erzeugte Signal ansprechen, um die durch die Magnetkrafterzeugungseinrichtung erzeugte Magnetkraft zu vergrößern, um die Verformung des Schneidebereichs der Klinge relativ zu der anfänglichen Verformung zu vergrößern und dadurch den Schneidebereich in einer ersten Richtung in bezug auf die Anfangsstellung des Schneidebereichs vorzumagnetisieren, wenn der Schneidebereich in einer zweiten Richtung entgegengesetzt zu der ersten Richtung als ein Ergebnis des Schneidevorgangs verschoben ist, wobei die Steuereinrichtungen (2 bis 6) die durch die Magnetkrafterzeugungseinrichtung erzeugte Magnetkraft verringern, um die Verformung des Schneidebereichs der Klinge relativ zu der anfänglichen Verformung zu verringern und dadurch zu gestatten, daß der Schneidebereich der Klinge sich in der zweiten Richtung entgegengesetzt der ersten Richtung bewegt, wenn der Schneidebereich in die erste Richtung als ein Ergebnis des Schneidevorgangs verschoben ist.

2. Schneidemaschine nach Anspruch 1, **dadurch gekennzeichnet, daß** die Magnetkrafterzeugungseinrichtung zumindest einen Elektromagneten (3) umfaßt, der gegenüber dem Schneidebereich der Klinge (1) angeordnet ist, wobei die teilweise geschnittene Scheibe (8a) zwischen dem zumindest einen Elektromagneten und dem Schneidebereich der Klinge während des Schneidevorgangs angeordnet ist.

3. Schneidemaschine nach Anspruch 2, **dadurch gekennzeichnet, daß** die Steuereinrichtungen (2 bis 6) den Schneidebereich der Klinge aus seiner freien Stellung gegen die Magnetkrafterzeugungseinrichtung (3) in eine vorbestimmte Anfangsstellung schieben, indem ein Anfangsstrom dem zumindest einen Elektromagneten (3) vor einem Beginnen des Schneidevorgangs zugeführt wird, und den Anfangsstrom entsprechend den Signalen, die von der Klingenstellungserfassungseinrichtung (2) erzeugt werden, während des Schneidevorgangs anpassen.

4. Schneidemaschine nach Anspruch 1, **dadurch gekennzeichnet, daß** die Magnetkrafterzeugungseinrichtung (3) eine Vielzahl an Krafterzeugungssektionen umfaßt, die auf einer Ebene parallel zu der Klinge (1) angeordnet sind.

5. Schneidemaschine nach Anspruch 1, **dadurch gekennzeichnet, daß** die Magnetkrafterzeugungseinrichtung zumindest einen Dauermagneten (2) und eine Halteeinrichtung (23) umfaßt, die wechselweise den zumindest einen Dauermagneten in der zu der Mittelachse der Klinge (1) parallelen Richtung in Antwort auf das Signal von der Klingenstellungserfassungseinrichtung (2) bewegt.

6. Schneidemaschine nach einem oder mehreren der Ansprüche 1 bis 5, **dadurch gekennzeichnet, daß** die Klinge von der Krafterzeugungseinrichtung weggebogen ist, wenn die Magnetkraft entfernt ist.

7. Schneidemaschine nach Anspruch 6, **dadurch gekennzeichnet, daß** das Biegen der Klinge durch eine Spannungserzeugungseinrichtung verursacht ist.

8. Schneidemaschine nach Anspruch 7, **dadurch gekennzeichnet, daß** die Spannungserzeugungseinrichtung einen Außenumfangsabschnitt der Klinge in seine Radialrichtung zieht.

9. Schneidemaschine nach Anspruch 6, **dadurch gekennzeichnet, daß** das Biegen der Klinge durch einen Neigungswinkel, in bezug auf die Klingenachse, einer Reihe von Richteinrichtungen zum Schärfen der Klinge verursacht ist, wobei die Richteinrichtungen in einer Ebene am Umfang der Klinge angeordnet sind.

## Revendications

1. Machine à découper en tranches pour découper une pièce à usiner (8) de forme cylindrique comportant un axe central en tranches (8a) d'une épaisseur uniforme choisie, comprenant :
a) une lame rotative interne (1) de forme circulaire constituée d'un matériau ferromagnétique, comprenant une ouverture ménagée dans le centre de celle-ci et comportant une arête tranchante (7) formée au niveau d'une marge périphérique interne (1a) de celle-ci ;
b) moyen d'entraînement en rotation d'une lame pour entraîner ladite lame en rotation autour d'un axe central de celle-ci ; et un moyen pour maintenir une tension dans ladite lame ;
c) moyen de support de pièce à usiner pour supporter ladite pièce à usiner (8) et pour positionner ladite pièce à usiner à l'intérieur de ladite ouverture de ladite lame (1) ; et
d) moyen de déplacement pour déplacer au moins l'un desdits moyens de support de pièce à usiner et moyen d'entraînement en rotation de lame de manière telle qu'une arête tranchante de ladite lame effectue un déplacement relatif perpendiculaire à l'axe central de ladite pièce à usiner pour découper en tranches ladite pièce à usiner par ladite lame ;
e) un moyen de détection de position de lame (2) ; et
f) un moyen générateur de force magnétique (3) ;
caractérisée en ce que
ledit moyen de détection de position de lame (2) est apte à générer un signal en réponse à une quantité de déplacement, depuis une position initiale (C), d'une zone tranchante de ladite lame devant être insérée dans ladite pièce à usiner, dans laquelle ledit moyen de détection est disposé opposé à ladite zone tranchante de ladite lame de belle manière qu'une tranche partiellement découpée (8a) soit disposée entre ledit moyen de détection et ladite zone tranchante de ladite lame pendant une opération de découpe ;
ledit moyen générateur de force magnétique (3) est apte à générer une force magnétique pour effectuer le déplacement de ladite zone tranchante de ladite lame (1), ledit moyen générateur de force magnétique pouvant être commandé pour faire varier l'intensité de ladite force magnétique appliquée à ladite lame et, en conséquence, la quantité de déformation de ladite zone tranchante depuis ladite position initiale ; ledit moyen générateur de force magnétique générant une force magnétique initiale de manière à effectuer une déformation initiale de ladite zone tranchante de ladite lame et à positionner ladite zone tranchante dans ladite position initiale préalablement à une opération de découpe, dans laquelle ledit moyen générateur de force magnétique (3) est disposé opposé à ladite zone tranchante de ladite lame de manière telle que ladite tranche partiellement découpée (8a) soit disposée entre ledit moyen générateur de force magnétique et ladite zone tranchante de ladite lame pendant ladite opération de découpe ; et
g) un moyen de commande (2 à 6) pour commander ladite force magnétique générée par ledit moyen générateur de force magnétique (3) en vue de commander la quantité de déplacement de ladite zone tranchante depuis ladite position initiale, ledit moyen de commande étant sensible audit signal généré par ledit moyen de détection de position de lame (2) pour accroître ladite force magnétique générée par ledit moyen générateur de force magnétique pour accroître la déformation de la zone tranchante de ladite lame par rapport à ladite déformation initiale, et avec pour effet, de polariser magnétiquement ladite zone tranchante dans une première direction par rapport à ladite position initiale de ladite zone tranchante lorsque ladite zone tranchante est déplacée dans une seconde direction opposée à ladite première direction par l'effet de l'opération de découpe, ledit moyen de commande (2 à 6) diminuant ladite force magnétique générée par ledit moyen générateur de force magnétique pour réduire la déformation de ladite zone tranchante de ladite lame par rapport à ladite déformation initiale et, avec pour effet, de permettre à ladite zone tranchante de ladite lame de se déplacer dans ladite seconde direction opposée à ladite première direction lorsque ladite zone tranchante est déplacée dans ladite première direction par l'effet de l'opération de découpe.

2. Machine à découper en tranches selon la revendication 1, dans laquelle ledit moyen générateur de force magnétique comprend au moins un électroaimant (3) qui est disposé opposé à ladite zone tranchante de ladite lame (1), ladite tranche partiellement découpée (8a) étant disposée entre ledit au moins un électroaimant et ladite zone tranchante de ladite lame pendant ladite opération de découpe.

3. Machine à découper en tranches selon la revendication 2, dans laquelle ledit moyen de commande (2 à 6) décale ladite zone tranchante de ladite lame à partir d'une première position libre de celle-ci vers ledit moyen générateur de force magnétique (3) jusqu'à une position initiale prédéterminée en délivrant un courant initial audit au moins un électroaimant (3) avant de commencer ladite opération de découpe et ajuste ledit courant initial en conformité avec lesdits signaux générés par ledit moyen de détection de position de lame (2) pendant ladite opération de découpe.

4. Machine à découper en tranches selon la revendication 1, dans laquelle ledit moyen générateur de force magnétique (3) comprend une pluralité de sections génératrices de force disposée sur un plan parallèle à ladite lame (1).

5. Machine à découper en tranches selon la revendication 1, dans laquelle ledit moyen générateur de force magnétique comprend au moins un aimant permanent (2) et un moyen de support (23) qui déplace en va-et-vient ledit au moins un aimant permanent dans la direction parallèle à l'axe central de ladite lame (1) en réponse au signal provenant dudit moyen de détection de position de lame (2).

6. Machine à découper en tranches selon l'une quelconque des revendications 1 à 5, dans laquelle ladite lame est courbée à l'opposé dudit moyen générateur de force lorsque la force magnétique est supprimée.

7. Machine à découper en tranches selon la revendication 6, dans laquelle la courbure de ladite lame est provoquée par un moyen générateur de tension.

8. Machine à découper en tranches selon la revendication 7, dans laquelle ledit moyen générateur de tension tire une partie périphérique externe de ladite lame dans la direction du rayon de celle-ci.

9. Machine à découper en tranches selon la revendication 6, dans laquelle la courbure de ladite lame est provoquée par un angle d'inclinaison, par rapport à l'axe de la lame, d'une suite de moyens d'ébarbage pour affûter ladite lame, ledit moyen d'ébarbage étant disposé dans un plan situé à la périphérie de ladite lame.
